# FASCICULE DE BREVET EUROPEEN

(11) **EP 1 846 980 B1**
(45) Date de publication et mention de la délivrance du brevet: **26.08.2009**
(21) Numéro de dépôt: 05702430.9
(22) Date de dépôt: 02.02.2005
(51) Int. Cl.: H01M 10/34, H01M 10/42, H01M 4/24, H01M 4/86, H01M 4/88, H01M 4/92

(54) **DISPOSITIF DE RECOMBINAISON CATALYTIQUE DES GAZ POUR ACCUMULATEURS ALCALINS À ANODE DE ZINC ABREGE**
EINRICHTUNG ZUR KATALYTISCHEN REKOMBINATION VON GASEN FÜR ALKALIBATTERIEN MIT VERKÜRZTER ZINKANODE
DEVICE FOR CATALYTIC RECOMBINATION OF GASES FOR ALKALINE BATTERIES WITH SHORTENED ZINC ANODE

(43) Date de publication de la demande: 24.10.2007
(73) Titulaire: S.C.P.S. Société de Conseil et de Prospective Scientifique S.A., 93115 Rosny-Sous-Bois (FR)
(72) Inventeur: BUGNET, Bernard, 94420 Le Plessis-Trévise (FR); DONIAT, Denis, 75116 Paris (FR); ROUGET, Robert, 75016 Paris (FR)
(74) Mandataire: Moinas, Michel
(86) Numéro de dépôt international: PCT/IB2005/000285
(87) Numéro de publication internationale: WO 2006/082463

(56) Documents cités:
- EP-A- 0 979 673
- WO-A-02/47806
- WO-A-98/26112
- US-A- 5 069 988

## Description

La présente invention concerne le domaine des générateurs électrochimiques, et plus particulièrement celui des accumulateurs alcalins à anode de zinc.

Il est connu que les accumulateurs à électrolyte aqueux consomment de l'eau au cours de leur fonctionnement, et plus précisément lors de la surcharge nécessaire à une charge complète de l'accumulateur, qui provoque une décomposition de l'eau de l'électrolyte, en hydrogène et oxygène.

Il y a différentes façons de gérer cette consommation d'eau, et notamment :
- en limitant la surcharge au risque toutefois de charger insuffisamment l'accumulateur ;
- en utilisant un large excès d'électrolyte de façon à limiter la fréquence des ajouts d'eau, situation qui ne peut cependant trouver à s'appliquer qu'à des batteries d'accumulateurs stationnaires, en raison des excès de poids et de volume qui en résultent.

Ces solutions ne permettent pas d'éviter la nécessité d'interventions périodiques de l'utilisateur, plus ou moins fréquentes.

Depuis longtemps, on fabrique des accumulateurs alcalins sans entretien, dits étanches, qui demeurent cependant équipés d'une soupape de sécurité s'ouvrant en cas d'excès de la pression interne de l'élément.

Ces accumulateurs mettent en oeuvre le principe de la recombinaison des gaz de décomposition de l'eau. Les exemples courants sont les accumulateurs alcalins nickel-cadmium (NiCd) et nickel-métal hydrure (NiMH) de formats cylindriques ou prismatiques qui équipent les appareils électriques et électroniques portables (téléphones, ordinateurs, ...).

L'électrode négative y est surdimensionnée en capacité par rapport à l'électrode positive dans un rapport qui varie le plus souvent de 1,2 à 1,5 environ.

Lorsque l'électrode positive de nickel est complètement chargée, la tension de la cellule croît, marquant le début de l'évolution d'oxygène, laquelle résulte de l'oxydation électrochimique de l'eau.

Lors de la surcharge de cette cathode, l'électrode négative continue à se charger.

L'oxygène formé au niveau de l'électrode positive va diffuser vers l'anode de cadmium ou d'hydrures métalliques et se recombiner, soit avec le cadmium métallique, soit avec l'hydrogène adsorbé dans l'hydrure métallique. Cette diffusion est facilitée par l'utilisation d'un séparateur perméable à l'oxygène et par l'emploi d'une quantité réduite d'électrolyte.

En accumulateur alcalin, les réactions observées au niveau de l'électrode négative sont les suivantes, où M est le métal entrant dans la réaction :

à l'électrode positive : 2 OH⁻ → H₂O + ½ O₂ + 2e⁻ [1]

à l'électrode négative : M+ ½ O₂ → MO [2]

MO + 2e⁻ + H₂O → M + 2 OH⁻ [3]

Le brevet français 2.788.887 décrit le principe des générateurs électrochimiques secondaires alcalins à anode de zinc, ainsi qu'une technologie simple et économique de réalisation, permettant d'atteindre de hauts niveaux de performances, en particulier en matière de durée de vie en cyclage.

L'invention objet dudit document concerne plus particulièrement la mise en oeuvre d'une électrode négative de zinc de type empâté - plastifié, dont la masse active est constituée d'un mélange comprenant au moins de l'oxyde de zinc, une poudre fine de céramique conductrice, et d'un liant plastique.

Selon cette technologie, on fait pénétrer la masse active anodique mise sous forme de pâte, laquelle est obtenue après mélange des divers constituants et d'un diluant, dans un collecteur tridimensionnel, constitué avantageusement d'une mousse réticulée de cuivre.

Les accumulateurs alcalins à anode de zinc, tels que nickel-zinc (NiZn) ou argent-zinc (AgZn) réalisés par l'assemblage d'électrodes de zinc fabriquées comme décrit ci-dessus, et de cathodes de nickel ou d'argent également de type empâté - plastifié dans un support en mousse de nickel, présentent une excellente aptitude au cyclage, et offrent des performances comparables ou supérieures à celles des autres générateurs secondaires alcalins à électrodes positives de nickel avec, en outre, l'avantage d'un moindre coût et l'absence de métaux lourds.

Les accumulateurs NiZn ou AgZn de cette technologie peuvent fonctionner en mode "ouvert" ou en mode "semi-étanche", ou encore "étanche".

Les principes généraux de fonctionnement qui s'appliquent pour les accumulateurs alcalins NiCd et NiMH, s'appliquent également aux accumulateurs à anode de zinc. Ainsi notamment, l'électrode négative de zinc est-elle surcapacitive par rapport à l'électrode positive.

Toutefois, dans le cas des accumulateurs nickel-zinc réalisés selon la technologie décrite dans le brevet français 2.788.887, la surcapacité de l'électrode de zinc n'excède pas environ 20 % de la capacité de l'électrode de nickel, ceci marquant une différence importante par rapport à ce qui est habituellement décrit dans la littérature, où l'anode de zinc présente couramment une surcapacité de 250 à 500 %, afin de réduire artificiellement la profondeur de décharge de l'anode et d'accroître sa durée de fonctionnement en cyclage.

En mode "ouvert", la fin de la charge de l'accumulateur s'accompagne d'un dégagement d'oxygène à l'électrode positive, puis d'hydrogène à l'électrode négative lorsque la charge se prolonge. Un ajout périodique d'eau est nécessaire, correspondant à la quantité décomposée d'électrolyte.

En mode "semi-étanche", l'accumulateur est muni d'une soupape qui s'ouvre à une faible pression, entre 10 et 20 kPa. L'oxygène formé se recombine partiellement avec le zinc métallique de l'anode, selon la réaction :

Zn + ½ O₂ → ZnO

ZnO + 2e⁻ + H₂O → Zn + 2 OH⁻

L'oxyde de zinc est lui-même en équilibre avec la forme soluble du zinc en milieu alcalin, le zincate, selon l'équation simplifiée suivante :

ZnO + 2 OH⁻ + H₂O ⇄ Zn(OH)₄²⁻

En mode "étanche", la totalité des gaz formés doit se recombiner pour éviter une augmentation excessive de la pression interne.

Le principe de fonctionnement d'un accumulateur nickel-zinc étanche tel que décrit ci-dessus trouve ses limites pour diverses raisons :
- une charge excessive et non contrôlée qui va conduire à un excès de production d'oxygène, la cinétique de la réaction [1] l'emportant sur celles des réactions [2] et [3]
- conséquence du phénomène décrit ci-dessus, aggravé par une diffusion ralentie de l'oxygène vers l'électrode négative, celle-ci est complètement chargée, et il se produit alors un dégagement d'hydrogène :

   H₂O + e⁻ → OH⁻ + ½ H₂
- le zinc métallique est thermodynamiquement instable, et tend à se corroder avec formation d'hydrogène :

   Zn + 2 H₂O → Zn(OH)₂ + H₂↗

Le mode de gestion des gaz formés, oxygène et hydrogène, est fonction de la conception de l'accumulateur et de sa réalisation, l'augmentation de pression interne favorisant la recombinaison de gaz au niveau de l'électrode de polarité opposée à celle où il se forme, mais n'étant acceptable que dans des limites étroites dans certains types de boîtier.

Ainsi, un élément de forme cylindrique à boîtier et couvercle métalliques supporte-t-il des pressions supérieures à 2000 kPa, alors que des éléments prismatiques accepteront des pressions maximum comprises entre 500 et 1000 kPa, en fonction des dimensions de l'accumulateur, de la nature des matériaux et du mode de liaison boîtier / couvercle. Pour des raisons de sécurité, des valves équipent les couvercles des accumulateurs à recombinaison. Elles sont réglées à environ 1500 kPa pour les éléments cylindriques, et jusqu'à 200 kPa pour les formats prismatiques.

La formation d'hydrogène et sa gestion constituent un aspect particulièrement important du fonctionnement d'un accumulateur nickel-zinc étanche.

Diverses solutions ont été proposées pour limiter l'augmentation de pression due à la formation d'hydrogène, parmi lesquelles :
- l'utilisation de catalyseurs à base d'argent par exemple, incorporés dans l'électrode positive, et permettant l'oxydation de l'hydrogène lors de la charge selon la réaction :

   H₂ + 2OH⁻ → 2H₂O + 2e⁻
- l'emploi d'une troisième électrode, reliée à l'électrode positive, et assurant l'oxydation de l'hydrogène ;
- l'emploi d'une structure catalytique constituée de carbone et de platine, déposée sur un collecteur métallique ou un tissu de carbone, chargé d'assurer la recombinaison de l'hydrogène et de l'oxygène.

Ces diverses solutions ne sont toutefois pas totalement satisfaisantes, soit en raison d'une cinétique limitée d'oxydation de l'hydrogène, soit en raison d'une construction complexe.

Une des limitations à l'emploi d'une structure catalytique de recombinaison d'hydrogène et d'oxygène est la contrainte de gestion thermique du système. En effet, la réaction entre l'hydrogène et l'oxygène est très exothermique et peut conduire à une augmentation de température importante, et à la formation de "points chauds", dommageables au bon fonctionnement du catalyseur. Il est nécessaire par conséquent d'assurer une évacuation rapide des calories produites lors de la réaction de recombinaison.

Par ailleurs, et cela constitue une autre difficulté touchant à la mise en oeuvre pratique de structures catalytiques, l'eau formée lors de la recombinaison de l'hydrogène et de l'oxygène ne doit pas limiter l'accès des gaz aux sites catalytiques.

L'objet de la présente invention est de répondre à ces diverses exigences, ses auteurs ayant à cet effet développé des structures catalytiques utilisant comme supports des mousses métalliques, et une mise en oeuvre adaptée à l'utilisation visée.

Cet objet est atteint par un dispositif de recombinaison catalytique de gaz pour accumulateurs alcalins à anode de zinc, ainsi qu'un accumulateur alcalin à anode de zinc comportant un tel dispositif, tels que définis dans les revendications.

L'invention concerne un dispositif de recombinaison catalytique des gaz formés lors de la charge d'un accumulateur alcalin à anode de zinc, ce dispositif étant composé d'une masse catalytique disposée au contact d'une mousse métallique alvéolaire réticulée assurant le rôle de support de catalyseur et de structure de dissipation thermique, ladite masse catalytique étant constituée d'un mélange de noir de carbone comprenant un métal et d'un liant hydrophobe, l'ensemble ayant été soumis à un traitement thermique pour assurer le frittage du liant hydrophobe de ladite masse catalytique. Ce dispositif se caractérise en ce que le métal est un métal de la mine du platine.

Les mousses métalliques sont aujourd'hui largement utilisées dans l'industrie des accumulateurs alcalins, en tant que supports-collecteurs d'électrodes. Ces mousses sont réalisées à partir d'un substrat poreux organique alvéolaire réticulé, à pores ouverts. Les substrats préférés sont des mousses de polyuréthane dites techniques, présentant une bonne régularité de structure.

Les méthodes de fabrication les plus utilisées consistent à rendre la mousse organique conductrice par un dépôt conducteur électronique, à la métalliser ensuite par dépôt(s) électrochimique(s), puis à éliminer par traitement thermique toute matière organique, et enfin à désoxyder et recuire le métal, l'alliage ou les métaux déposés, constitutifs de la structure réticulée finale, laquelle doit conserver sa porosité essentiellement ou totalement ouverte d'origine. Elles permettent notamment de réaliser des mousses nickel, de cuivre ou d'alliages à base de ces métaux, utilisables dans le cadre de l'invention.

Dans le cadre de la présente invention, pour la recombinaison des gaz formés lors de la charge de l'accumulateur, la mousse métallique mise en oeuvre joue un double rôle : elle sert d'une part de support au catalyseur de la réaction, et elle contribue d'autre part à assurer l'évacuation des calories produites lors de la recombinaison de l'hydrogène et de l'oxygène.

En ce qui concerne la dissipation thermique, celle-ci est assurée par radiation, convection et/ou conduction. Cette dissipation est d'autant meilleure que le métal constituant la mousse métallique est lui-même un bon conducteur thermique. Afin d'optimiser cette caractéristique, il est intéressant, dans un des modes de réalisation de l'invention, d'utiliser une mousse de cuivre, ce métal constituant un excellent conducteur thermique.

Pour une telle réalisation, il sera avantageux d'utiliser des mousses de cuivre ou d'alliages de cuivre, telles que celles qui peuvent être industriellement produites dans des conditions économiques selon le procédé décrit dans le brevet français n°2.737.507.

Il est par ailleurs nécessaire que la mousse métallique soit chimiquement inerte dans ses conditions d'utilisation, et en particulier tant vis-à-vis de la réaction catalytique et des gaz réactifs, que dans l'électrolyte alcalin de l'accumulateur. Une couche protectrice peut à cet effet être appliquée en surface des mailles de la mousse, sur tout métal ou alliage qui ne satisferait pas à ces conditions.

Ainsi, il convient notamment, pour une mise en oeuvre d'une mousse de cuivre, que la surface de ses mailles soit revêtue d'une couche superficielle protégeant le cuivre de la corrosion intervenant en présence d'oxygène. Cette couche protectrice peut, par exemple, être une couche de nickel, laquelle peut être avantageusement réalisée par électrolyse, et présenter une bonne qualité de recouvrement continu, offrir une efficace protection chimique, et un bon comportement en température.

Bien que la circulation des gaz dans l'espace situé entre le sommet des électrodes et le couvercle de l'accumulateur soit limitée, il est important de faire en sorte que les gaz puissent pénétrer au sein de la structure catalytique, qui sera par ailleurs de préférence conçue de telle manière que la distance entre le dispositif et un collecteur d'évacuation thermique vers l'extérieur de l'accumulateur soit la plus réduite possible.

L'avantage d'une structure de type mousse par rapport à un support plan ou de tortuosité ou surface développée moindres, tel qu'un métal déployé, est d'offrir une densité importante de mailles par unité de surface, donc une importante surface développée, et un très grand accès jusqu'au coeur de la structure.

Ainsi, on pourra réaliser le dispositif catalytique de telle manière que le catalyseur soit fixé sur les mailles de la mousse support par tout moyen approprié, et enrobe les mailles de ladite mousse, tout en conservant à celle-ci une porosité élevée qui permettra d'assurer une circulation aisée de l'oxygène et de l'hydrogène en son sein.

La dissipation par conduction est bien sûr le mode majeur d'évacuation des calories produites lors de la recombinaison des gaz. Dans le cadre de l'invention, et pour favoriser l'efficacité de ce mode de dissipation, on peut avantageusement relier par tout moyen, notamment par l'une de ses extrémités, la structure recouverte de catalyseur à l'une des bornes de l'accumulateur, laquelle fera office de collecteur d'évacuation thermique, afin de bénéficier de l'effet "radiateur" qu'offrent les électrodes fixées à des bornes sortant de l'accumulateur, et donc en contact avec l'air extérieur. La partie de la structure catalytique placée ainsi au contact de l'une des bornes de l'accumulateur, peut avantageusement être dépourvue de dépôt de catalyseur, pour un meilleur transfert thermique entre deux surfaces métalliques. Elle peut aussi être laminée, pour disposer d'une meilleure surface de contact.

On peut également fixer par tout moyen approprié, et notamment souder, tout ou partie de la mousse métallique, en particulier une extrémité ou un bord dépourvu de catalyseur, à une pièce ou plaque métallique pouvant constituer tout ou partie du couvercle de l'accumulateur, pour favoriser une évacuation des calories vers l'extérieur de l'accumulateur.

Dans le cas où sont utilisés un boîtier et un couvercle en matériau plastique (nylon, ABS, NORYL^{©}, ...), la pièce ou plaque métallique peut être sertie dans le couvercle, et communiquer avec l'extérieur du boîtier.

La mousse métallique réticulée utilisée comme support du catalyseur dans le dispositif selon l'invention, peut être choisie dans une large gamme de dimensions de pores, et en particulier du grade 30 PPI (Pore Par Inch linéaire) inclus (diamètre moyen de pores d'environ 0.8 mm) au grade 90 PPI inclus (diamètre moyen de pores d'environ 0.2 mm).

On peut utiliser des mousses métalliques selon l'invention dans une très large gamme de densités, les principales contraintes qui s'imposent en la matière étant d'une part de conserver une porosité ouverte suffisante dans cette structure support, et d'autre part de disposer d'un réseau de drainage thermique suffisamment efficace, la nature du métal ou alliage choisi ayant également une influence dans ce domaine.

Pour des épaisseurs initiales de la mousse avant éventuelle compression, généralement comprises entre un et trois millimètres, on pourra avantageusement utiliser des densités comprises entre 200 et 1500 mg/cm² de surface apparente.

Il est naturellement possible de réaliser un dispositif de recombinaison catalytique en superposant plusieurs bandes de mousses, dont l'une au moins est revêtue de catalyseur, sans sortir du cadre de la présente invention.

Les catalyseurs appliqués au contact du support en mousse métallique, pour constituer un dispositif de recombinaison catalytique selon l'invention, sont ceux qui permettent de catalyser la réaction de combinaison entre l'oxygène et l'hydrogène. Il peut avantageusement s'agir de catalyseurs à base de métaux de la mine du platine, tels que notamment platine et palladium, et pouvant associer ces métaux à des carbones ou graphite, et en particulier du noir de carbone.

La masse catalytique est constituée d'un mélange de noir de carbone comprenant un métal de la mine du platine, et d'un liant hydrophobe, l'ensemble étant soumis à un traitement thermique pour assurer le frittage du liant hydrophobe de ladite masse catalytique

De préférence la masse catalytique est constituée d'un mélange de noir de carbone sur lequel a été déposé du platine.

Avantageusement, on fait pénétrer la masse catalytique dans la mousse par laminage ou compression, ou par pulvérisation.

L'invention concerne aussi un accumulateur alcalin à anode de zinc comportant à l'intérieur de son boîtier, un dispositif de recombinaison catalytique des gaz selon l'invention.

De préférence, le dispositif de recombinaison catalytique des gaz est relié à l'une des bornes ou à une partie métallique du couvercle de l'accumulateur.

On décrit ci-après à titre d'illustrations non limitatives de l'invention, quatre exemples de mise en oeuvre de structures métalliques catalytiques de recombinaison, qui permettent de mesurer l'intérêt de ladite invention.

### Exemple 1 :

On mélange du noir de carbone sur lequel a été déposé du platine à raison de 10 % en poids, avec du pétrole dont le point d'ébullition est situé à 200°C. On ajoute du PTFE sous forme de suspension aqueuse à 60 %, à raison de 40 % en poids exprimés en matière solide. L'ensemble est malaxé jusqu'à obtention d'une pâte constituant la masse catalytique.

On découpe par ailleurs une bande de mousse de nickel de grade 45 PPI (taille moyenne des pores de 0,6 mm environ), d'épaisseur 2,5 mm, de longueur 100 mm et de largeur 15 mm et présentant une densité de 50 mg/cm² de surface apparente.

On lamine la pâte obtenue précédemment sous forme de feuille d'épaisseur 1 mm, et on découpe une lanière de longueur 100 mm et de largeur 5 mm. Cette lanière est placée sur la bande de mousse, centrée sur celle-ci, et l'ensemble est laminé jusqu'à pénétration de la pâte dans la mousse. L'ensemble est traité sous azote à 300°C pendant 10 minutes pour assurer le frittage du liant hydrophobe.

La structure obtenue est enroulée sous forme de spirale et placée dans un élément d'accumulateur NiZn prismatique de capacité 30 Ah, comportant un volume réduit d'électrolyte. Le couvercle de l'accumulateur est muni d'une jauge de pression permettant de suivre l'évolution de la pression interne de l'élément au cours des cycles de charge et de décharge.

L'une des extrémités de la mousse est reliée à l'une des polarités de l'accumulateur, sans qu'il y ait possibilité de contact entre la spirale et le sommet des séparateurs, afin d'éviter tout risque de polarisation de la structure catalytique par une continuité ionique. Il est possible d'éviter un tel risque de contact au moyen d'un espaceur en matériau organique.

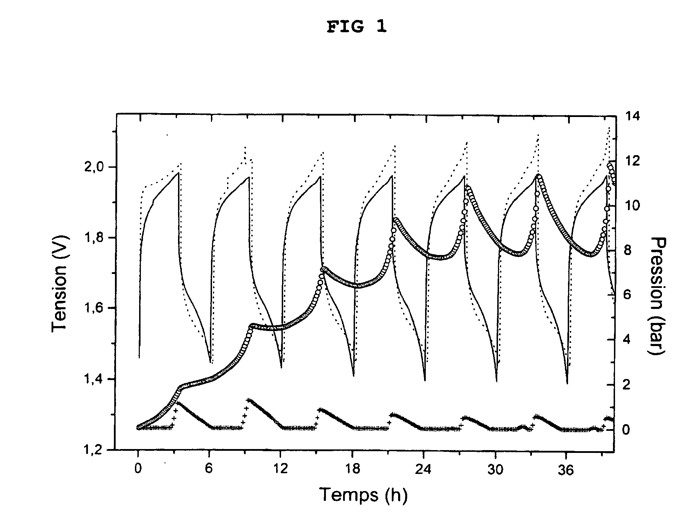

Le boîtier d'accumulateur est ensuite fermé. On soumet l'accumulateur à un cyclage au régime de C/4 ampères soit 7,5 A pour un accumulateur de 30 Ah, sans contrôle de la tension de l'élément en fin de charge. La figure unique montre l'évolution de la pression interne de l'accumulateur sans (courbe 1A) et avec (courbe 1B) structure catalytique de recombinaison selon l'invention. On constate que la structure catalytique améliore notablement la recombinaison de l'hydrogène avec l'oxygène, et permet de conserver une pression interne faible. Les courbes 2A et 2B de la figure 1 correspondent respectivement aux valeurs de tension de l'accumulateur durant les cycles, sans structure catalytique et avec ladite structure.

Après plus de 10.000 heures de fonctionnement, on n'observe pas d'augmentation de la pression interne de l'accumulateur liée à une perte d'activité du catalyseur. Les valeurs limites de pression auxquelles permet de se cantonner l'utilisation de la structure catalytique selon l'invention, sont compatibles avec le fonctionnement en mode étanche (sans entretien) d'un accumulateur nickel-zinc prismatique utilisant un boîtier plastique, lequel pourra être muni d'une soupape de sécurité tarée pour une ouverture à 2 bars (environ 200kPa).

### Exemple 2 :

On réalise une suspension dans l'eau de noir de carbone sur lequel a été déposé du palladium à raison de 10 % en poids. On ajoute du PTFE sous forme de suspension aqueuse dans le mélange eau - noir de carbone fortement agité, à raison de 30 % en poids.

La suspension est filtrée, et le mélange noir de carbone - PTFE lavé. Après séchage, la poudre obtenue est mise en suspension dans l'eau et dispersée à l'aide d'un sonificateur.

On utilise une mousse de nickel de grade 60 PPI (taille moyenne des pores de 0,4 mm environ), d'épaisseur 2 mm, de longueur 50 mm et de largeur 15 mm, d'une densité de 55 mg/cm² de surface apparente. La dispersion de la poudre catalytique précédemment obtenue est pulvérisée à l'aide d'un pistolet pulvérisateur utilisé pour la chromatographie en couche mince. Plusieurs pulvérisations sont effectuées avec, entre chacune d'entre elles, un séchage qui peut être réalisé avec un pistolet à air chaud. L'opération est pratiquée sur les deux faces de la mousse, afin d'assurer un recouvrement complet des mailles de la mousse, sans toutefois fermer sa porosité. On a pris soin d'épargner l'une des extrémités de la bande de tout dépôt de catalyseur, sur une longueur de 10 mm.

La structure ainsi obtenue est ensuite séchée à l'étuve à 100°C sous air, puis soumise à un traitement thermique à 300°C sous azote pendant 15 minutes.

La structure catalytique est placée dans un accumulateur NiZn semblable à celui décrit dans l'Exemple 1, l'extrémité de la bande non revêtue de catalyseur étant reliée à l'une des polarités, par soudage sur la partie de la borne située à l'intérieur de l'accumulateur. Dans des conditions de cyclage identiques à celles décrites précédemment, les évolutions de la pression interne correspondent sensiblement à celles de la courbe 1 B de la Figure 1, en demeurant inférieures à 2 bars (environ 200 kPa).

### Exemple 3 :

On réalise une structure catalytique selon l'exemple 2, l'extrémité de la mousse dépourvue de catalyseur étant soudée par point sur une plaque métallique en acier qui a été préalablement sertie dans le couvercle en nylon du boîtier.

Dans des conditions de cyclage identiques à celles décrites dans l'Exemple 1, les évolutions de la pression interne sont similaires à celles de la courbe 1 B de la Figure 1.

### Exemple 4 :

On prépare une structure catalytique selon l'invention, par application du mode opératoire décrit dans l'Exemple 1, la mousse de nickel de grade 45 PPI étant ici remplacée par une mousse de cuivre de même grade, mais de densité 35 mg/cm², sur laquelle on a effectué un dépôt protecteur de nickel de 20 mg/cm², par électrolyse.

Dans des conditions opératoires identiques à celles détaillées dans l'Exemple 1, on constate que la pression interne de l'accumulateur suit encore une fois une évolution semblable à celle décrite par la courbe 1 B de la Figure 1.

## Revendications

1. Dispositif de recombinaison catalytique des gaz formés lors de la charge d'un accumulateur alcalin à anode de zinc, ce dispositif étant composé d'une masse catalytique disposée au contact d'une mousse métallique alvéolaire réticulée assurant le rôle de support de catalyseur et de structure de dissipation thermique, ladite masse catalytique étant constituée d'un mélange de noir de carbone comprenant un métal et d'un liant hydrophobe, l'ensemble ayant été soumis à un traitement thermique pour assurer le frittage du liant hydrophobe de ladite masse catalytique, **caractérisé en ce que** le métal est un métal de la mine du platine.

2. Dispositif de recombinaison catalytique selon la revendication 1, **caractérisé en ce que** la mousse métallique est constituée en nickel, ou en alliage à base de nickel, et présente une porosité essentiellement ou totalement ouverte.

3. Dispositif de recombinaison catalytique selon la revendication 1, **caractérisé en ce que** la mousse métallique est constituée en cuivre, ou en alliage à base de cuivre, et présente une porosité essentiellement ou totalement ouverte.

4. Dispositif de recombinaison catalytique selon la revendication 1, **caractérisé en ce que** les mailles de la mousse métallique sont revêtues d'un dépôt protecteur destiné à assurer une inertie chimique de la mousse dans les conditions de son utilisation.

5. Dispositif de recombinaison catalytique selon la revendication 1, **caractérisé en ce que** l'on fait pénétrer la masse catalytique dans la mousse par laminage ou compression.

6. Dispositif de recombinaison catalytique selon la revendication 1, **caractérisé en ce que** l'on fait pénétrer la masse catalytique dans la mousse par pulvérisation.

7. Dispositif de recombinaison catalytique selon la revendication 1, **caractérisé en ce que** la masse catalytique est constituée d'un mélange de noir de carbone sur lequel a été déposé du platine.

8. Dispositif de recombinaison catalytique selon la revendication 1, **caractérisé en ce que** la mousse métallique utilisée présente un diamètre moyen de pores compris entre environ 0,2 et 0,8 mm

9. Dispositif de recombinaison catalytique selon la revendication 1, **caractérisé en ce que** la mousse métallique utilisée présente une densité comprise entre 200 et 1500 mg/cm² de surface apparente.

10. Dispositif de recombinaison catalytique selon la revendication 1, **caractérisé en ce qu'**il est relié par tout moyen à l'une des bornes de l'accumulateur, pour favoriser la dissipation thermique des calories fournies par la réaction exothermique de recombinaison des gaz.

11. Dispositif de recombinaison catalytique selon la revendication 1, **caractérisé en ce qu'**il est relié par tout moyen au couvercle métallique ou à une pièce métallique constitutive d'une partie du couvercle du boîtier d'accumulateur, pour favoriser la dissipation thermique des calories fournies par la réaction exothermique de recombinaison des gaz.

12. Accumulateur alcalin à anode de zinc **caractérisé en ce qu'**il comporte, à l'intérieur de son boîtier, un dispositif de recombinaison catalytique des gaz selon l'une des revendications 1 à 11.

13. Accumulateur alcalin à anode de zinc selon la revendication 12, **caractérisé en ce que** ledit dispositif de recombinaison catalytique des gaz est relié par tout moyen à l'une des bornes ou à une partie métallique du couvercle de l'accumulateur.

## Claims

1. Device for catalytic recombination of the gases formed during the charging of an alkaline battery with zinc anode, this device being composed of a catalytic mass arranged in contact with a cross-linked cellular metal foam serving as catalyst support and heat dissipating structure, said catalytic mass being composed of a mixture of carbon black including a metal and a hydrophobic binder, the whole having been subjected to a heat treatment so as to cause the hydrophobic binder of said catalytic mass to be sintered, **characterised in that** the metal is a metal from the platinum group.

2. Catalytic recombination device according to claim 1, **characterised in that** the metal foam is composed of nickel, or of nickel-based alloy, and exhibits a substantially or completely open porosity.

3. Catalytic recombination device according to claim 1, **characterised in that** the metal foam is composed of copper, or of copper-based alloy, and exhibits a substantially or completely open porosity.

4. Catalytic recombination device according to claim 1, **characterised in that** the lattices of the metal foam are covered with a protective coating intended to ensure a chemical inertia of the foam in the conditions of its use.

5. Catalytic recombination device according to claim 1, **characterised in that** the catalytic mass is introduced into the foam by rolling or compression.

6. Catalytic recombination device according to claim 1, **characterised in that** the catalytic mass is introduced into the foam by spraying.

7. Catalytic recombination device according to claim 1, **characterised in that** the catalytic mass is composed of a mixture of carbon black on which platinum has been deposited.

8. Catalytic recombination device according to claim 1, **characterised in that** the metal foam used exhibits a mean pore diameter of between about 0.2 and 0.8 mm.

9. Catalytic recombination device according to claim 1, **characterised in that** the metal foam used exhibits a density of between 200 and 1500 mg/cm³ of apparent surface.

10. Catalytic recombination device according to claim 1, **characterised in that** it is connected by any means to one of the terminals of the battery, in order to promote the thermal dissipation of the calories produced by the exothermal recombination reaction of the gases.

11. Catalytic recombination device according to claim 1, **characterised in that** it is connected by any means to the metal cover or to a metal part forming part of the cover of the battery case, in order to promote the thermal dissipation of the calories produced by the exothermal recombination reaction of the gases.

12. Alkaline battery with zinc anode, **characterised in that** it contains, inside its case, a device for catalytic recombination of the gases according to any one of claims 1 to 11.

13. Alkaline battery with zinc anode according to claim 12, **characterised in that** the device for catalytic recombination of the gases is connected by any means to one of the terminals or to a metal part of the cover of the battery.

## Patentansprüche

1. Einrichtung zur katalytischen Rekombination von Gasen beim Laden eines alkalischen Akkumulators mit einer Zinkelektrode, wobei die besagte Einrichtung eine katalytische Masse aufweist, die in Kontakt mit einem wabenförmigen vernetzten Metallschaum steht, welcher ein Traggerüst für einen Katalysator und eine Struktur zur thermischen Dissipation bereitstellt, wobei die besagte katalytische Masse eine Mischung aus ein Metall aufweisenden Ruß und einem hydrophoben Bindemittel enthält und wobei das Ganze zur Sicherstellung der Sinterung des Bindemittels der besagten katalytischen Masse thermisch behandelt wurde, **dadurch gekennzeichnet, dass** das Metall ein Metall der Platingruppe ist.

2. Einrichtung zur katalytischen Rekombination nach Anspruch 1, **dadurch gekennzeichnet, dass** der Metallschaum Nickel oder eine Nickellegierung enthält und eine im Wesentlichen oder vollständig offene Porosität aufweist.

3. Einrichtung zur katalytischen Rekombination nach Anspruch 1, **dadurch gekennzeichnet, dass** der Metallschaum Kupfer oder eine Kupferlegierung enthält und eine im Wesentlichen oder vollständig offene Porosität aufweist.

4. Einrichtung zur katalytischen Rekombination nach Anspruch 1, **dadurch gekennzeichnet, dass** die Maschen des Metallschaums von einer Schutzablagerung bedeckt sind, um den Schaum unter den bei seiner Nutzung vorherrschenden Bedingungen chemisch inert zu machen.

5. Einrichtung zur katalytischen Rekombination nach Anspruch 1, **dadurch gekennzeichnet, dass** die katalytische Masse durch Walzen oder unter Einsatz von Druck in den Schaum eingebracht wird.

6. Einrichtung zur katalytischen Rekombination nach Anspruch 1, **dadurch gekennzeichnet, dass** die katalytische Masse durch Zerstäuben oder Pulverisieren in den Schaum eingebracht wird.

7. Einrichtung zur katalytischen Rekombination nach Anspruch 1, **dadurch gekennzeichnet, dass** die katalytische Masse eine Mischung aus Ruß aufweist, auf dem Platin abgelagert wurde.

8. Einrichtung zur katalytischen Rekombination nach Anspruch 1, **dadurch gekennzeichnet, dass** der eingesetzte Metallschaum einen mittleren Porendurchmesser zwischen etwa 0,2 und 0,8 Millimeter aufweist.

9. Einrichtung zur katalytischen Rekombination nach Anspruch 1, **dadurch gekennzeichnet, dass** der eingesetzte Metallschaum eine Dichte zwischen etwa 200 und 1.500 Milligramm je Quadratzentimeter der sichtbaren Oberfläche aufweist.

10. Einrichtung zur katalytischen Rekombination nach Anspruch 1, **dadurch gekennzeichnet, dass** diese auf beliebige Weise mit einer der Anschlussklemmen des Akkumulators verbunden ist, um die thermische Dissipation der Wärme zu begünstigen, die bei der exothermen Rekombination der Gase erzeugt wird.

11. Einrichtung zur katalytischen Rekombination nach Anspruch 1, **dadurch gekennzeichnet, dass** diese auf beliebige Weise mit einer metallischen Abdeckung oder mit einem konstruktiven Metallteil eines Teils der Abdeckung des Akkumulatorgehäuses verbunden ist, um die thermische Dissipation der Wärme zu begünstigen, die bei der exothermen Rekombination der Gase erzeugt wird.

12. Alkalischer Akkumulator mit einer Zinkelektrode, **dadurch gekennzeichnet, dass** dieser im Inneren seines Gehäuses eine Einrichtung zur katalytischen Rekombination von Gasen gemäß einem der Ansprüche 1 bis 11 aufweist.

13. Alkalischer Akkumulator mit einer Zinkelektrode nach Anspruch 12, **dadurch gekennzeichnet, dass** die besagte Einrichtung zur katalytischen Rekombination von Gasen auf beliebige Weise mit einer der Anschlussklemmen oder mit einem metallischen Bereich der Abdeckung des Akkumulators verbunden ist.
